# EUROPEAN PATENT APPLICATION

(11) **EP 1 772 860 A2**
(43) Date of publication of application: **11.04.2007**
(21) Application number: 06118734.0
(22) Date of filing: 10.08.2006
(51) Int. Cl.: G11B 7/085

(54) **Optical Pickup Apparatus, Method of Controlling the Same, and Method of Releasing a Locking State Thereof**

(30) Priority: 06.10.2005 KR 20050093961
(71) Applicant: Samsung Electronics Co., Ltd., Yeongtong-gu Suwon-si, Gyeonggi-do (KR)
(72) Inventor: Bae, Won Youl, Gyeonggi-Do (KR); Lee, Young Bok, Seoul (KR)
(74) Representative: Grünecker, Kinkeldey, Stockmair & Schwanhäusser Anwaltssozietät

(57) **Abstract**

A method of releasing a locking state of an optical pickup apparatus having a feeding unit having a feeding motor, a lead screw rotated by the feeding motor and provided with a spiral groove formed in the outer circumferential surface thereof, and a slider for converting the rotating motion of the lead screw into a rectilinear reciprocating motion and transmitting the rectilinear reciprocating motion to a pickup unit, includes alternately repeating regular and reverse rotations of the lead screw so as to release the locking state in which contact portions of the slider are deviated from the spiral groove of the lead screw.

## Description

### BACKGROUND OF THE INVENTION

### 1. Field of the Invention

Aspects of the present invention relate to an optical pickup apparatus, a method of controlling the same, and a method of releasing a locking state thereof, and more particularly, to an optical pickup apparatus, which alternately repeats regular and reverse rotations of a feeding motor to release a locking state thereof, a method of controlling the same, and a method of releasing the locking state thereof.

### 2. Description of the Related Art

Generally, an optical disk player comprises a spindle motor for rotating a disk, an optical pickup unit for recording data on the rotating disk or reading data from the disk, and a feeding unit for performing an operation for feeding the optical pickup apparatus in the radial direction of the disk (i.e., for performing a feeding operation).

Korean Patent Laid-open Publication No. 2004-18015 discloses a feeding unit. As disclosed, the feeding unit comprises a lead screw having a spiral groove formed therein, a driving motor for rotating the lead screw, and a power transmission gear for converting the rotating motion of the lead screw into a rectilinear reciprocating motion and transmitting the rectilinear reciprocating motion to the optical pickup apparatus. The power transmission gear comprises a slider having contact portions engaged with the spiral groove of the lead screw, and an elastic member for elastically supporting the slider towards the lead screw so that the slider elastically contacts the spiral groove. The feeding unit serves to reciprocate the optical pickup apparatus from the innermost circumference of a lead-in region of the disk to the outermost circumference of a lead-out region of the disk. The feeding unit using the lead screw and the slider has advantages, such as accuracy of feeding and prevention of backlash. However, when an external impact or excessive load is applied to the feeding unit, a locking state occurs in which the contact portions of the slider deviate from the spiral groove of the lead screw. Thereby, the feeding unit malfunctions.

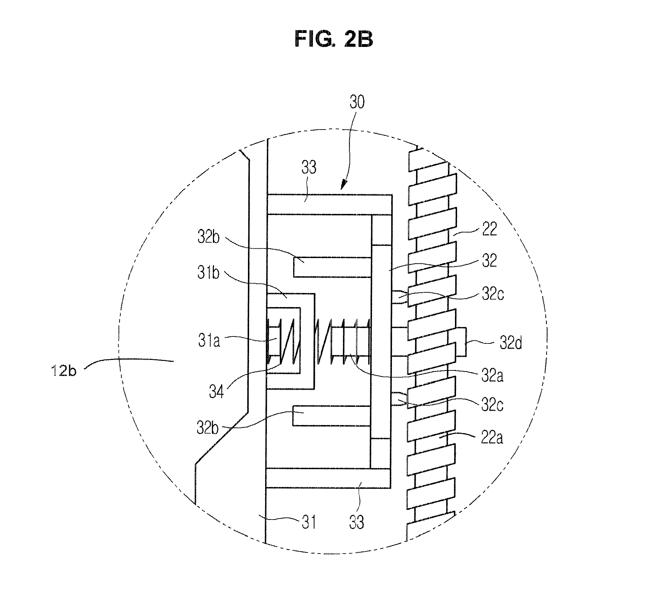

FIG. 2B illustrates a lead screw 22 and a slider 30 in a locking state. As shown in FIG. 2B, contact portions 32c of a second body 32 deviate from a spiral groove 22a of the lead screw 22. In the locking state, a compression spring 34 for elastically supporting the second body 32 is compressed, and has higher elastic force pushing the second body 32 than that in a normal state. Further, in this state, a hook-shaped stopper 32d for preventing the slider 30 from being separated from the lead screw 22 strongly contacts the lead screw 22. The contact portions 32c of the slider 22 strongly contact the lead screw 22 by the compression spring 34 and the stopper 32d, and frictional force between the contact portions 32c and the lead screw 22 is increased. Thereby, the feeding unit malfunctions so that the feeding unit is not operated by normal output.

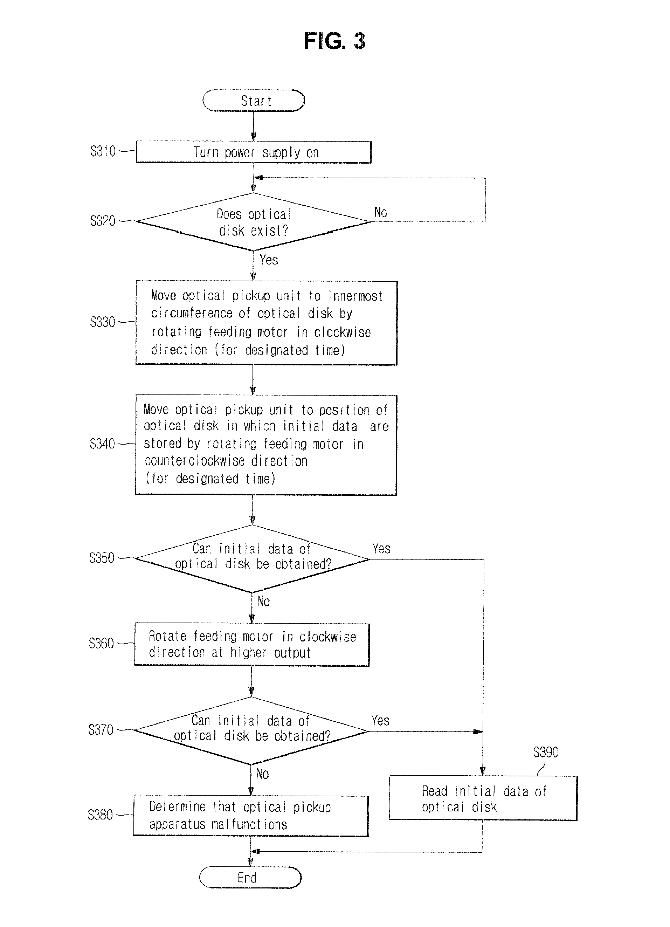

FIG. 3 is a flow chart illustrating a method for operating of a conventional optical pickup apparatus when power is applied to the optical pickup apparatus. The method for operating the conventional optical pickup apparatus comprises a basic operation for reading initial data of an optical disk (S310~S340), and an operation in an emergency mode performed when the initial data of the optical disk cannot be read (S360~S380).

When a power supply is turned on (S310), it is determined whether or not an optical disk exists using an optical pickup unit (S320). When it is determined that the optical disk exists, the optical pickup unit moves to the innermost circumference of the optical disk (S330), and then moves to a position of the optical disk in which initial data are stored (S340). When the feeding unit is in a normal state, the optical pickup apparatus is able to obtain the initial data (S350) and reads the initial data of the disk and performs recording and reproducing operations of the optical disk (S390). However, when the feeding unit is in a locking state, since the feeding unit cannot move the optical pickup unit by normal power, the optical pickup unit cannot move to the position of the optical disk in which the initial data are stored and thus cannot obtain the initial data of the optical disk (S350).

When it is impossible to read the initial data of the optical disk even after several tries, the optical pickup apparatus is operated in an emergency mode (S360~S380). In the emergency mode, a motor is rotated under the condition that the power of the motor is increased (S360), and the optical pickup unit is moved in a direction towards the inner circumference of the optical disk (S360~S380).

However, when the optical pickup unit moves in the direction towards the inner circumference of the optical disk, the optical pickup unit collides with the innermost circumference, thereby generating noise. Further, since the impact is applied to the optical pickup unit, the impact causes a difficulty in reading the initial data of the optical disk. Also, when the lead screw is continuously rotated under the condition that the optical pickup unit located at the innermost circumference of the optical disk cannot move any more, teeth of the slider 22 contacting the contact portions 32c are damaged.

### SUMMARY OF THE INVENTION

Aspects of the invention provide a method of releasing a locking state of an optical pickup apparatus without generating impact to an optical pickup unit and a feeding unit.

Aspects of the invention provide an optical pickup apparatus, which minimizes a time taken to obtain initial data of an optical disk, and a method of controlling the same.

In accordance with an aspect of the present invention, a method of releasing a locking state of an optical pickup apparatus having a feeding unit having a feeding motor, a lead screw rotated by the feeding motor and provided with a spiral groove formed in the outer circumferential surface thereof, and a slider for converting the rotating motion of the lead screw into a rectilinear reciprocating motion and transmitting the rectilinear reciprocating motion to a pickup unit, comprises: alternately repeating regular and reverse rotations of the lead screw so as to release the locking state in which contact portions of the slider are deviated from the spiral groove of the lead screw.

According to an aspect of the invention, the regular and reverse rotations of the lead screw are alternately repeated and are performed at the maximum output of the feeding motor for rotating the lead screw.

According to an aspect of the invention, the regular and reverse rotations of the lead screw are alternately repeated and are performed three times.

According to an aspect of the invention, the regular and reverse rotations of the lead screw are alternately repeated and are performed such that moving distances of the pickup unit are gradually decreased.

In accordance with one aspect of the present invention, a method of controlling an optical pickup apparatus having a feeding unit having a feeding motor, a lead screw rotated by the feeding motor and provided with a spiral groove formed in the outer circumferential surface thereof, and a slider for converting the rotating motion of the lead screw into a rectilinear reciprocating motion and transmitting the rectilinear reciprocating motion to a pickup unit, comprises: performing a locking-releasing operation for releasing a locking state in which contact portions of the slider are deviated from the spiral groove of the lead screw when power is applied to the optical pickup apparatus.

According to an aspect of the invention, the locking-releasing operation is performed by alternately repeating regular and reverse rotations of the lead screw.

According to an aspect of the invention, the regular and reverse rotations of the lead screw are alternately repeated and are performed at the maximum output of the feeding motor for rotating the lead screw.

According to an aspect of the invention, the regular and reverse rotations of the lead screw are alternately repeated and are performed three times.

According to an aspect of the invention, the regular and reverse rotations of the lead screw are alternately repeated and are performed such that moving distances of the pickup unit are gradually decreased.

In accordance with another aspect of the present invention, an optical pickup apparatus comprises: a feeding unit having a feeding motor, a lead screw rotated by the feeding motor and provided with a spiral groove formed in the outer circumferential surface thereof, and a slider for converting the rotating motion of the lead screw into a rectilinear reciprocating motion and transmitting the rectilinear reciprocating motion to a pickup unit; and a control unit for controlling the feeding motor so that regular and reverse rotations of the lead screw are alternately repeated so as to release a locking state in which contact portions of the slider are deviated from the spiral groove of the lead screw.

According to an aspect of the invention, the control unit controls the feeding motor so that the regular and reverse rotations of the lead screw, which are alternately repeated, are performed at the maximum output of the feeding motor for rotating the lead screw.

According to an aspect of the invention, the control unit controls the feeding motor so that the regular and reverse rotations of the lead screw, which are alternately repeated, are performed three times.

According to an aspect of the invention, the control unit controls the feeding motor so that the regular and reverse rotations of the lead screw, which are alternately repeated, are performed such that moving distances of the pickup unit are gradually decreased.

### BRIEF DESCRIPTION OF THE DRAWINGS

These and/or other aspects and advantages of the invention will become apparent and more readily appreciated from the following description of the embodiments, taken in conjunction with the accompanying drawings in which:
FIG. 1 is a plan view of an optical disk player according to an aspect of the invention;
FIGS. 2A and 2B are enlarged views of a portion "A" of FIG. 1, respectively illustrating a lead screw and a slider in a normal state and a locking state;
FIG. 3 is a flow chart illustrating a method of operating a conventional optical pickup apparatus when power is applied to the optical pickup apparatus;
FIG. 4 is a flow chart illustrating a method of operating an optical pickup apparatus in accordance with an aspect of the present invention when power is applied to the optical pickup apparatus; and
FIG. 5 is a flow chart illustrating one embodiment of a method of releasing a locking state of the optical pickup apparatus of an aspect of the present invention.

### DETAILED DESCRIPTION OF THE EMBODIMENTS

Reference will now be made in detail to the embodiments of the present invention, an example of which is illustrated in the accompanying drawings, wherein like reference numerals refer to like elements throughout. The embodiments are described below to explain the present invention by referring to the annexed drawings.

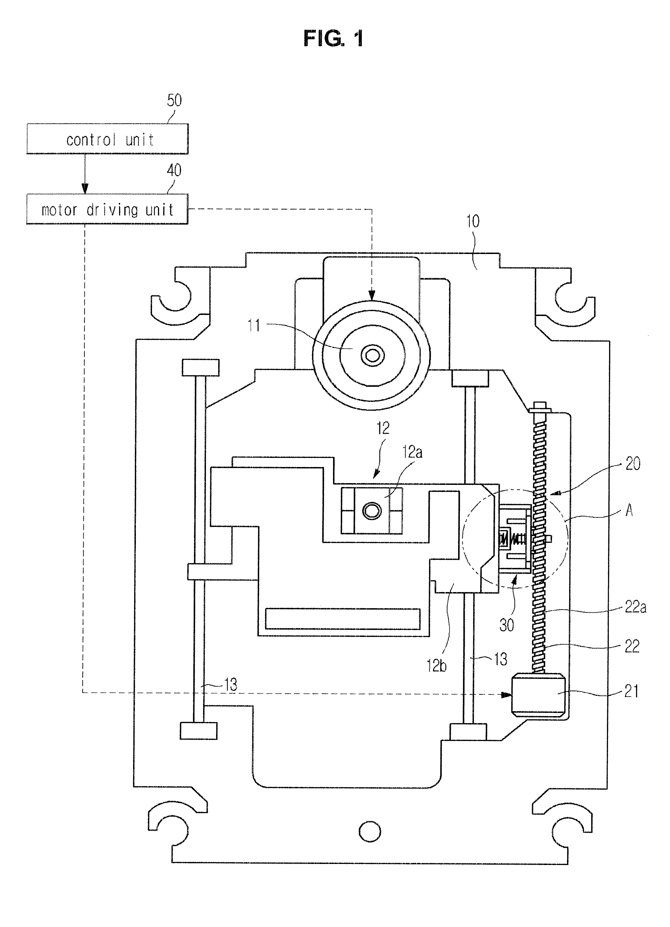

FIG. 1 is a plan view of an optical disk player according to an aspect of the invention. As shown in FIG. 1, the optical disk player comprises a base chassis 10 made of a metal plate, on which various components are installed. A spindle motor 11 for rotating a disk is installed on one side of the base chassis 10. A pickup unit 12, which moves in the radial direction of the disk (not shown) for recording data on and/or reproducing data from the disk or reading data recorded on the disk, is installed on the base chassis 10 at a position below the spindle motor 11. The pickup unit 12 comprises an optical system 12a, and a pickup base 12b on which the optical system 12a is installed. Guide shafts 13 for guiding the movement of the pickup unit 12 are disposed in parallel at both sides of the pickup unit 12. Both ends of the guide shafts 13 are fixed to the base chassis 10 so that the guide shafts 13 do not move. The pickup base 12b are slidably installed on the guide shafts 13. However, it is understood that other configurations are possible, that the relative locations of the shafts 13 can be otherwise devised, and that the shafts 13 can be movable in order to help ensure that the shafts 13 are substantially parallel with each other and/or with a lead screw 22.

A feeding unit 20 for reciprocating the pickup unit 12 in the radial direction of the disk is installed at one side of the pickup unit 12. The feeding unit 20 comprises a feeding motor 21, the lead screw 22 rotated by the feeding motor 21, and a slider 30 for converting the rotating motion of the lead screw 22 into a rectilinear reciprocating motion and transmitting the rectilinear reciprocating motion to the pickup unit 12. The feeding motor 21 is fixed to the base chassis 10. The lead screw 22 is disposed in parallel with the guide shafts 13, and a spiral groove 22a is formed in the outer circumferential surface of the lead screw 22. A control unit 50 controls an overall operation of the optical disk player to record and/or reproduce data with respect to a recording medium (not shown), and controls a motor driving unit 40 to drive the spindle motor 11 and the feeding motor 21.

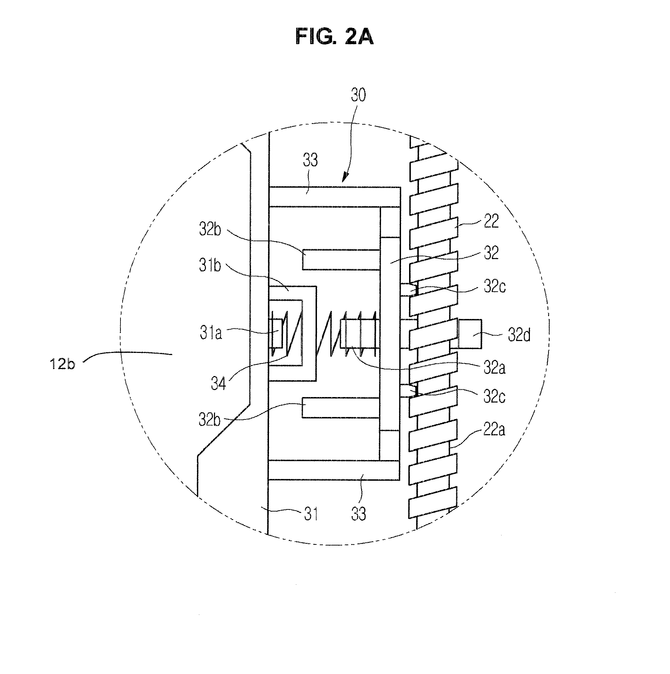

Hereinafter, with reference to FIGs. 2A and 2B, the operation of the optical disk player will be described in detail. The slider 30 (generally made of plastic) is installed at one side of the pickup base 12b. The slider 30 comprises a first body 31 attached to the pickup base 12b, a second body 32 contacting the lead screw 22, and a connection portion 33 for connecting the second body 32 to the first body 31. The connection portion 33 is designed such that the connection portion 33 is movable in some degree, and transmits the elastic force of a compression spring 34 to the second body 32. Protrusions 32b extend from the second body 32 toward the first body 31 and a U shaped extension 31 b extends from the first body 31 toward the second body 32 and allows the spring 34 to pass through between the first and second bodies 31, 32. A first spring guide 31 a extends between the first body 31 and the extension 31 b and forms a base to which the spring 34 is attached to the first body 31. A second spring guide 32a extends between the second body 32 and the extension 31 b and forms a base to which the spring 34 is attached to the second body 32. Contact portions 32c, which are formed on the second body 32, are connected to the spiral groove 22a of the lead screw 22. A hook-shaped stopper 32d for preventing the contact portions 32c from being separated from the spiral groove 22a is formed on the second body 32. It is understood that the slider 30 can be of other materials and/or combinations of materials in other aspects of the invention. Moreover, it is understood that the groove 22a can be shapes other than spiral in other aspects of the invention.

In a normal state, as shown in FIG. 2A, the contact portions 32c are engaged with the spiral groove 22a by the hook-shaped stopper 32d and the elastic force of the compression spring 34. When an external impact or an excessive load is applied to the optical disk player, a locking state in which the contact portions 32c are deviated from the spiral groove 22a may occur (i.e., the contact portion 32c is on a land portion of the groove 22a instead of in the groove 22a). As mentioned above, in the locking state, the slider 30 is not operated by normal output due to excessive frictional force between the contact portions 32c and the lead screw 22. Conventionally, in order to release the above locking state, the lead screw 22 was rotated in the direction towards the inner circumference of the optical disk for a designated time. However, the rotation of the lead screw 22 generates noise and causes a malfunction of the optical pickup unit 12.

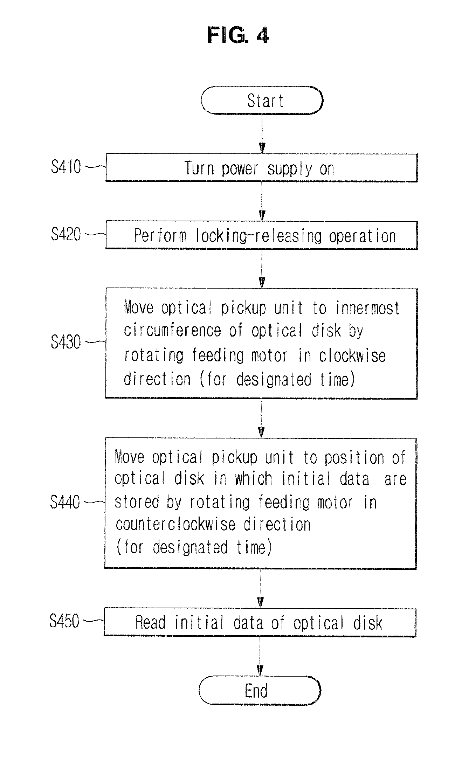

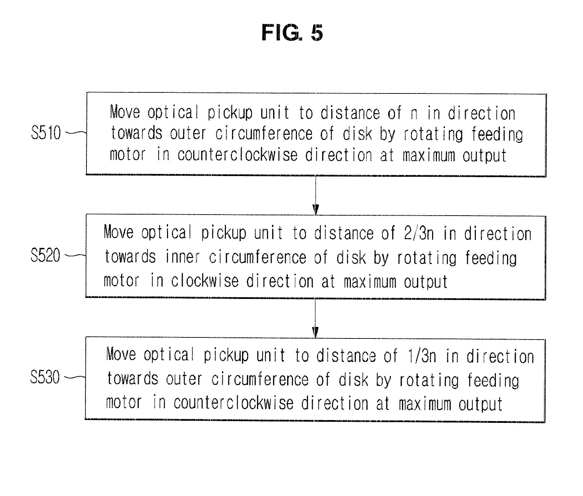

With reference to FIGs. 4 and 5, a method of controlling the optical pickup apparatus and a method of releasing a locking state of the optical pickup apparatus in accordance with aspects of the present invention will be described in detail. When power is applied to the optical disk player (S410), the control unit 50 controls the motor driving unit 40 so that the feeding motor 2 1 performs a locking-releasing operation (S420). As described above, the contact portions 32c of the slider 30 are engaged with the spiral groove 22a of the lead screw 22 by the compression spring 34 and the stopper 32d. Generally, except for specific conditions, the impact sufficient to prevent the engagement between the contact portions 32c and the spiral groove 22a is not applied to the optical disk player during driving. That is, external impact or excessive load sufficient to induce the locking state of the optical disk player is applied to the optical disk player only when a power supply is turned off and the optical disk player moves or is moved. Accordingly, when power is applied to the optical disk player, the optical disk player performs the locking-releasing operation, thereby releasing the locking state, which may be generated when power is not applied to the optical disk player. Compared to the operation of the conventional optical disk player in an emergency mode (S360~S380), which as shown in FIG. 3 is performed when initial data of an optical disk cannot be obtained in spite of several repetitions of the driving of the feeding unit 20 in the locking state. In contrast, the locking-releasing operation S420 of the optical disk player according to an aspect of the invention is performed when power is applied to the optical disk player in operation S410 and thus shortens a driving time of the optical disk player. However, it is understood that the locking-releasing operation S420 can be performed at other times in addition to or instead of prior to moving the optical pickup in operation S430 in other aspects of the invention.

After the feeding unit 20 is returned to its normal state through the locking-releasing operation of operation S410, the optical disk player performs a basic operation for obtaining initial data of the optical disk (S430~S450). That is, the control unit 50 drives the motor driving unit 40 to drive the feeding motor 21 at normal power for a designated time so that the optical pickup unit 12 moves to the innermost circumference of the optical disk (S430). Whether or not the optical pickup unit 12 moves to the innermost circumference of the optical disk is determined by several known methods, such as using a limit switch and driving a motor so that the optical pickup unit 12 moves to a designated distance from the assumed initial position thereof. When the optical pickup unit 12 moves to the innermost circumference of the optical disk, the feeding motor 21 is rotated in a direction towards the outer circumference of the optical disk so that the optical pickup unit 12 moves to a designated position of the optical disk so as to obtain the initial data of the optical disk (S440). The rotating direction of the feeding motor 21 for moving the optical pickup unit 12 towards the outer circumference of the optical disk is opposite to the rotating direction of the feeding motor 21 for moving the optical pickup unit 12 towards the inner circumference of the optical disk. Generally, the feeding motor 21 is rotated in the counterclockwise direction (CCW) so as to move the optical pickup unit 12 towards the outer circumference of the optical disk, and is rotated in the clockwise direction (CW) so as to move the optical pickup unit 12 towards the inner circumference of the optical disk. Thereafter, the optical disk player reads the initial data of the optical disk, and then performs reproducing and recording operations of the optical disk (S450). While not required in all aspects, the optical disk player can further utilize an emergency mode, such as the emergency mode (S360~S380) shown in FIG. 3. Additionally, it is understood that the locking release operation S420 can be performed at other times, such as after operation S430 and/or in the emergency mode (S360~S380) shown in FIG. 3 in other aspects of the invention.

FIG. 5 is a flow chart illustrating one embodiment of a method for releasing a locking state of the optical pickup apparatus of the present invention. In order to release the locking state of the feeding unit 20, the control unit 50 drives the feeding motor 21 at the maximum output so that the feeding motor 21 is alternately rotated in regular and reverse directions, thereby efficiently releasing the locking state. First, the feeding motor 21 is rotated in a degree such that the optical pickup unit moves to a designated distance (n) in the direction towards the outer circumference of the optical disk (S510). The moving distance (n) of the optical pickup unit is a distance sufficient to release the locking state, and may be several mm. When the moving distance (n) is excessively short, the locking state is not completely released, and when the moving distance (n) is excessively long, noise is generated identically with the conventional optical pickup apparatus. Since the optical pickup apparatus of the present invention performs the locking-releasing operation through the alternate repetitions of regular and reverse rotations of the feeding motor, the moving distance (n) of the optical pickup unit is shorter than that of the conventional optical pickup unit.

After the optical pickup unit moves to the designated moving distance (n) in the direction towards the outer circumference of the optical disk, the optical pickup unit moves again to a distance, shorter than the moving distance (n), in the direction towards the inner circumference of the optical disk. The gradual decrease of the moving distances of the optical pickup unit reduces or prevents noise, which is generated when the optical pickup unit is located at the innermost or outermost circumference of the optical disk. That is, since the optical pickup unit moves in the direction towards the inner circumference of the optical distance to a distance shorter than the moving distance of the optical pickup unit in the direction towards the outer circumference of the optical disk, although the optical pickup unit is initially located at the innermost circumference, noise due to the movement of the optical pickup unit in the direction towards the inner circumference is not generated (S520).

Finally, the optical pickup unit moves again to a distance, shorter than the moving distance in operation S520, in the direction towards the outer circumference of the optical disk (S530). While described as starting in a particular direction, it is understood that the starting direction and/or rotational directions for the reversals in S510 through S530 can be otherwise. Moreover, it is understood that other patterns of counter rotations can be used at varying speeds and directions. Additionally, while the disclosed example counter-rotation pattern has each rotation being in an opposite direction from the preceding rotation, it is understood that the pattern could have consecutive same direction rotations having various speeds and/or distances n prior to or after an opposite direction rotation.

As described above, the optical pickup apparatus according to aspects of the present invention more efficiently releases its locking state through alternate repetitions of regular and reverse rotations of the feeding motor, and prevents generation of noise and abrasion of the contact portions 32c of the slider 30 through the movement of the optical pickup unit to gradually shorter distances.

As is apparent from the above description, aspects of the present invention provide an optical pick up apparatus, which efficiently releases its locking state through alternate repetitions of regular and reverse rotations of a feeding motor, a method of controlling the same, and a method of releasing the locking state thereof.

While not required, it is understood that aspects of the invention can be implemented as computer readable software and/or firmware implemented by a processor (such as the control unit 50). Additionally, it is understood that the optical disk player can be a reproducing apparatus and/or a recording apparatus, and can be included in a computer or as a stand alone audio and/or video component. Also, while described as used in the context of the optical pickup apparatus, it is understood that aspects of the invention can be used for other apparatuses using screws to drive an element along guide rails, and/or in apparatuses usable with non-optical and magneto-optical recording media.

Further, the optical pickup apparatus of aspects of the present invention first perform a locking-releasing operation when power is applied to the optical pickup apparatus, thereby shortening a driving time thereof.

Moreover, since moving distances of an optical pickup unit of the optical pickup apparatus of aspects of the present invention are gradually decreased when the regular and reverse rotations of the feeding motor are alternately repeated, it is possible to prevent generation of noise and damage to a slider and the optical pickup unit.

Although embodiments of the invention have been shown and described, it would be appreciated by those skilled in the art that changes may be made in these embodiments without departing from the principles and spirit of the invention, the scope of which is defined in the claims and their equivalents.

## Claims

1. A method of releasing a locking state of an optical pickup apparatus having a feeding unit having a feeding motor, a lead screw rotated by the feeding motor and including an outer circumferential surface with a spiral groove, and a slider that converts a rotating motion of the lead screw into a rectilinear reciprocating motion and transmits the rectilinear reciprocating motion to a pickup unit, the method comprising:
alternately repeating regular and reverse rotations of the lead screw so as to release the locking state in which contact portions of the slider are deviated from the spiral groove of the lead screw.

2. The method as set forth in claim 1, wherein the regular and reverse rotations of the lead screw are alternately repeated at a maximum output of the feeding motor for rotating the lead screw.

3. The method as set forth in claim 2, wherein a combined number of rotation reversals of the lead screw is two.

4. The method as set forth in claim 3, wherein the regular and reverse rotations of the lead screw are alternately repeated such that moving distances of the pickup unit in each successive rotation are gradually decreased.

5. A method of controlling an optical pickup apparatus having a feeding unit having a feeding motor, a lead screw rotated by the feeding motor and having an outer circumferential surface with a spiral groove, and a slider that converts a rotating motion of the lead screw into a rectilinear reciprocating motion and transmits the rectilinear reciprocating motion to a pickup unit, the method comprising:
performing a locking-releasing operation for releasing a locking state, in which contact portions of the slider are deviated from the spiral groove of the lead screw, when power is applied to the optical pickup apparatus and before attempting to read initial data of an optical disk using the pickup unit.

6. The method as set forth in claim 5, wherein the locking-releasing operation is performed by alternately repeating regular and reverse rotations of the lead screw.

7. The method as set forth in claim 6, wherein the regular and reverse rotations of the lead screw, are alternately repeated at a maximum output of the feeding motor for rotating the lead screw.

8. The method as set forth in claim 7, wherein a combined number of rotation reversals of the lead screw is two.

9. The method as set forth in claim 8, wherein the regular and reverse rotations of the lead screw are performed such that moving distances of the pickup unit are gradually decreased in each successive rotation.

10. An optical pickup apparatus comprising:
a pickup unit which transfers data with respect to an optical recording medium;
a feeding unit having a feeding motor, a lead screw rotated by the feeding motor and having an outer circumferential surface including a spiral groove, and a slider for converting a rotating motion of the lead screw into a rectilinear reciprocating motion and transmitting the rectilinear reciprocating motion to the pickup unit; and
a control unit which drives the feeding motor to move the pickup unit to transfer the data and controls the feeding motor to alternately repeat regular and reverse rotations of the lead screw to release a locking state, wherein the locking state occurs when contact portions of the slider are deviated from the spiral groove of the lead screw.

11. The optical pickup apparatus as set forth in claim 10, wherein the control unit controls the feeding motor so that the regular and reverse rotations of the lead screw are alternately repeated at a maximum output of the feeding motor for rotating the lead screw.

12. The optical pickup apparatus as set forth in claim 11, wherein the control unit controls the feeding motor so that a number of rotation reversals of the lead screw is two.

13. The optical pickup apparatus as set forth in claim 12, wherein the control unit controls the feeding motor so that the regular and reverse rotations of the lead screw are performed such that moving distances of the pickup unit are gradually decreased in each successive rotation.

14. A method for of releasing a locking state of an apparatus, comprising:
alternately repeating regular and reverse rotation directions of a lead screw to ensure that a slider contact portion that is not in a groove of the lead screw is in the groove, wherein when the slider contact portion is in the groove, the slider contact portion translates the rotations of the lead screw into a rectilinear motion to move a slider connected to the slider contact portion.

15. The method of 14, further comprising driving the lead screw in one of the regular and reverse rotations while using an optical pickup on the slider to transfer data with respect to a recording medium after the slider contact portion is in the groove.

16. The method of 15, further comprising turning on a power for an optical pickup apparatus including the lead screw and the slider, wherein the alternately repeating regular and reverse rotations is performed prior to the optical pickup being used to transfer the data and after turning on the power.

17. The method of 14, further comprising turning on a power for an optical pickup apparatus including the lead screw and the slider, wherein the alternately repeating regular and reverse rotations is performed after turning on the power and without detecting an inability of the optical pickup apparatus to detect initial data from a recording medium.

18. The method of 17, wherein the alternately repeating regular and reverse rotations is performed automatically after turning on the power.

19. The method of 14, wherein the alternately repeating regular and reverse rotations comprises:
performing a set of the regular rotations of the lead screw for a first predetermined amount of time at a first rotational speed; and
performing a set of the reverse rotations of the lead screw for a second predetermined amount of time at a second rotational speed.

20. The method of 19, wherein the alternately repeating regular and reverse rotations further comprises performing a further set of one of the regular and reverse rotations of the lead screw for a third predetermined amount of time at a third rotational speed.

21. The method of 19, wherein the second predetermined amount of time and the second rotational speed move the slider a distance when the slider contact portion is in the groove that is one third less than a distance the slider is moved at the first predetermined amount of time and at the first rotational speed when the slider contact portion is in the groove.

22. The method of 19, further comprising turning on a power for an optical pickup apparatus including the lead screw and the slider, wherein the alternately repeating regular and reverse rotations is performed prior to the optical pickup apparatus transferring data and after turning on the power.

23. The method of 19, further comprising turning on a power for an optical pickup apparatus including the lead screw and the slider, wherein the alternately repeating regular and reverse rotations is performed after turning on the power and without detecting an inability of the optical pickup apparatus to detect initial data from a recording medium.

24. The method of 19, wherein the alternately repeating regular and reverse rotations is performed automatically after turning on the power.

25. An optical pickup apparatus comprising:
a pickup unit which transfers data with respect to an optical recording medium;
a feeding unit having a lead screw including a groove, and a slider to slide the pickup unit including a contact portion which follows the groove to convert a rotating motion of the lead screw into a rectilinear motion to slide the pickup unit; and
a control unit to drive the feeding unit to perform alternately repeating regular and reverse rotation directions of the lead screw to ensure that the contact portion that is not in a groove of the lead screw is in the groove, and to drive the feeding unit to rotate the lead screw to move the slider with the optical pickup such that pickup unit transfers the data when the contact portion is in the groove.

26. The optical pickup apparatus of 25, wherein the control unit automatically performs the alternately repeating regular and reverse rotations power is turned on for the apparatus.

27. The optical pickup apparatus of 25, wherein the control unit, to perform the alternately repeating regular and reverse rotation directions of the lead screw, performs
a set of the regular rotations of the lead screw for a first predetermined amount of time at a first rotational speed; and
a set of the reverse rotations of the lead screw for a second predetermined amount of time at a second rotational speed.

28. The optical pickup apparatus of 27, wherein the second predetermined amount of time and the second rotational speed move the slider a distance when the contact portion is in the groove that is one third less than a distance the slider is moved at the first predetermined amount of time and at the first rotational speed when the contact portion is in the groove.

29. The optical pickup apparatus of 25, wherein the control unit automatically performs the alternately repeating regular and reverse rotations power is turned on for the apparatus and before the optical pickup is driven to obtain initial data from the optical recording medium.

30. The optical pickup apparatus of 27, wherein the control unit automatically performs the alternately repeating regular and reverse rotations power is turned on for the apparatus and before the optical pickup is driven to obtain initial data from the optical recording medium.
